# EUROPEAN PATENT APPLICATION

(11) **EP 4 575 308 A1**
(43) Date of publication of application: **25.06.2025**
(21) Application number: 23217755.0
(22) Date of filing: 18.12.2023
(51) Int. Cl.: F21V 7/04, G02B 19/00

(54) **LIGHTING ELEMENT**

(71) Applicant: D. Swarovski KG, 6112 Wattens (AT)
(72) Inventor: PRAMSOLER, Peter, 6233, Kramsach (AT); GAPP, Christof, 6071, Aldrans (AT); NISSEN, Dennis, 6134, Vomp (AT); LEBER-FILZMOSER, Annemarie, 6263, Fügen (AT)
(74) Representative: Keltie LLP

(57) **Abstract**

A lighting element comprising: an element having a body that is at least partially transparent and defining a first surface and a second surface; a light source configured to direct incident light into the body of the element; a first layer on at least a portion of the first surface of the body, the first layer being configured to transmit between 50% and 70% of incident light therethrough, and to reflect at least a portion of the non-transmitted incident light; and a second layer on at least a portion of the second surface of the body, the second layer being a mirror layer configured to reflect at least 50% of incident light. The first and second layers are configured to reflect light towards each other. At least one of the first or second surfaces comprises a plurality of planar facets. In this way, at least a portion of incident light from the light source is reflected back and forth within the body between the first layer and the second layer thereby creating a plurality of reflections from at least one planar facet.

## Description

### Introduction

The invention relates to a lighting element, in particular an automotive exterior light.

Luxury vehicles are designed to provide an enhanced experience for their users, with the aesthetics and 'special features' of a vehicle being highly valued contributors to the overall experience. It is therefore desirable to modify and enhance existing vehicle features to increase their visual appeal where it is safe and practicable to do so.

For example, while the external lighting on a vehicle is necessary to aid communication between vehicles, and also to increase the visibility of the vehicle and the road ahead, as long as these functions are preserved it is also possible to modify the vehicle lighting to produce a pleasing and premium visual effect.

Faceted crystal elements have been used in vehicle exterior lights to create a visually complex impression. In general, a large number of facets creates a particular 'premium' effect by providing a complex path for light as it is reflected off the facets. Producing a large number of facets can be cost-intensive and also requires a large depth of the element. The large depth increases its size and weight, which can be undesirable.

It is against the above background that the invention has been devised.

### Statements of Invention

The invention resides in a lighting element comprising: an element having a body that is at least partially transparent and defining a first surface and a second surface; a light source configured to direct incident light into the body of the element; a first layer on at least a portion of the first surface of the body, the first layer being configured to transmit between 50% and 70% of incident light therethrough, and to reflect at least a portion of the non-transmitted incident light; and a second layer on at least a portion of the second surface of the body, the second layer being a mirror layer configured to reflect at least 50% of incident light. The first and second layers are configured to reflect light towards each other. At least one of the first or second surfaces comprises a plurality of planar facets. In this way, at least a portion of incident light from the light source is reflected back and forth within the body between the first layer and the second layer thereby creating a plurality of reflections from at least one planar facet.

Because the first layer is configured to reflect a portion of incident light and to transmit a portion of incident light, each time light is reflected towards the first layer, a portion is transmitted through the first layer where it is observed by a viewer, and a portion is reflected back to the second layer, where it is reflected back into the body towards the first layer. In this way, the multiple reflections of the facets are created, and are visible to a viewer. This creates a complex appearance, giving the impression that the body has more planar facets than it actually does.

The first and second surfaces may each comprise a plurality of planar facets. Alternatively, only the first surface may comprise a plurality of planar facets, while the second surface is planar or otherwise non-faceted, or vice-versa.

Where the first layer comprises a plurality of planar facets, the first layer may cover at least a first one of the planar facets of the first surface. The first layer may cover a plurality of facets, and may optionally cover substantially all of the first surface.

Where the second layer comprises a plurality of planar facets, the second layer may cover at least a first one of the planar facets of the second surface. The second layer may cover a plurality of facets, and may optionally cover substantially all of the second surface.

The body may comprise a front surface and a rear surface opposite the front surface. The front surface may define the first surface and the rear surface may define the second surface. The front surface may be a presentation surface that is configured to face towards a viewer during use of the lighting element.

A surface of the body may comprise a light inlet region. The light source may be configured to direct incident light into the body of the element through the light inlet region. Multiple light inlet regions may be provided.

The lighting element may be configured such that first layer and the second layer do not extend over the light inlet region. In other words, the light inlet region may be substantially free from the first layer and the second layer. The light inlet region may be configured to transmit a higher proportion of incident light therethrough than the first layer.

The light inlet region may be arranged on a side of the body between the first surface and the second surface.

The light source may be configured to produce white light.

The first layer may comprise a dielectric material.

The body may comprise glass or a plastics material.

The body may comprise a material having a refractive index of at least 1.45, preferably 1.50, most preferably at least 1.52.

The first layer may be configured to reflect between 30% and 50% of incident light.

The second layer may be configured to reflect at least 90% of incident light.

The first layer and the body may be configured such that the reflectivity of the first layer is greater than the Fresnel reflections of the body for all angles of incidence of the incident light.

The lighting element may be an automotive exterior light.

The invention also extends to an element suitable for use in the lighting element above, the element comprising: a body that is at least partially transparent and defining a first surface and a second surface; a first layer on at least a portion of the first surface of the body, the first layer being configured to transmit between 50% and 70% of incident light therethrough, and to reflect at least a portion of the non-transmitted incident light; and a second layer on at least a portion of the second surface of the body, the second layer being a mirror layer configured to reflect at least 50% of incident light. The first and second layers are configured to reflect light towards each other, and at least one of the first or second surfaces comprises a plurality of planar facets, such that when light is incident on the body, at least a portion of incident light is reflected back and forth within the body between the first layer and the second layer thereby creating a plurality of reflections from at least one planar facet.

The element may have any of the features of the element described above.

### Brief Description of the Drawings

Embodiments of the invention will now be described, by way of example only, with reference to the accompanying drawings, in which:
Figure 1 is a cross-sectional view of a lighting element according to an embodiment of the invention, comprising an element and a light source, wherein the element has first and second layers provided on respective front and rear surfaces;
Figure 2 is a cross-sectional view of the lighting element of Figure 1, showing the path of light as it is reflected through a body of the element, with multiple reflections of the facets between the first and second layers;
Figure 3 is a cross-sectional view of a lighting element according to another embodiment of the invention;
Figure 4 is a cross-sectional view of a lighting element according to a further embodiment of the invention;
Figure 5 is a cross-sectional view of a lighting element according to a further embodiment of the invention;
Figure 6a is a photograph of the front side of a lighting element according to another embodiment of the invention, with first and second layers removed, illuminated to show the physical structure of the element; and
Figure 6b is a photograph of the front side of the element of Figure 6a with the first and second layers present, illuminated as it would be in a lighting element, showing a complex faceted appearance due to multiple reflections of the facets between the first and second layers.

### Description of Embodiments of the Invention

Throughout this application, references are made to "transmitting", "reflecting" or "absorbing" a particular percentage of incident light. Such parameters are typically measured by a respective coefficient. For example, a transmission coefficient of 50% (or 0.5) means that 50% of light is transmitted: i.e. the intensity of the transmitted light is 50% of the intensity of the incident light. The respective coefficients can be dependent on the wavelength of the incident light: throughout this application, a reference to a particular coefficient means that for all light in the visible spectrum (i.e. all light from 400 to 700 nm), the overall coefficient is the specified percentage. For example, a transmission coefficient of 50% to 70% means that the total intensity of all transmitted light in the visible spectrum is between 50% and 70% of the total intensity of all incident light in the visible spectrum.

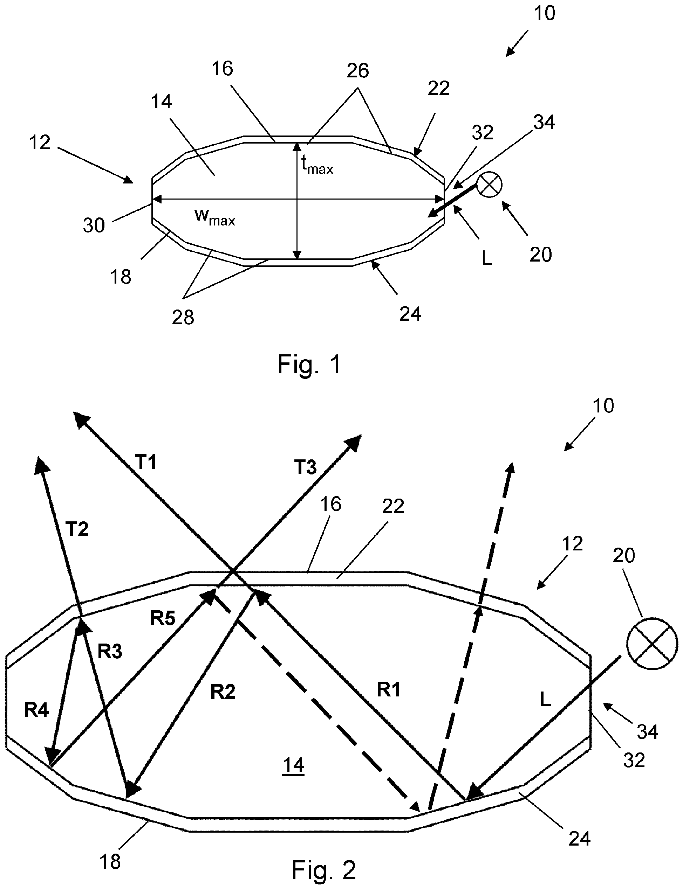

Figure 1 illustrates a lighting element 10. In the example, the lighting element takes the form of an automotive exterior light, such as a headlight, though the lighting element may take any suitable form. The lighting element 10 comprises an element 12 having a body 14 that is at least partially transparent (i.e. it transmits at least some light therethrough). In this example, the body 14 is fully transparent, being made of a transparent material.

The body 14 defines a first surface or front surface 16 and a second or rear surface 18. At least one of the front or rear surfaces 16, 18 - in this example both the front and rear surfaces 16, 18 - comprises a plurality of planar facets 26, 28.

The lighting element 10 also comprises a light source 20 that is configured to direct incident light L into the body 14 of the element 12.

A first layer 22 is provided on at least a portion of the front surface 16 of the body 14. The first layer 22 is configured to transmit between 50% and 70% of incident light L therethrough, and to reflect at least a portion of the non-transmitted incident light L.

A second layer 24 is provided on at least a portion of the rear surface 18 of the body 14. The second layer 24 is a mirror layer that is configured to reflect at least 50% of incident light L.

The first and second layers 22, 24 are configured to reflect light towards each other. As can be seen in Figure 2, in this way, at least a portion of incident light L from the light source 20 is reflected back and forth within the body 14 between the first layer 22 and the second layer 24, thereby creating a plurality of reflections from one or more of the planar facets 26, 28.

The body 14 is made of any suitable material that is at least partially transparent. 'Partially transparent' in this sense means that at least some light in the visible spectrum is transmitted through the body 14. Suitable materials include, for example, glass, ceramic, glass-ceramic, plastics, precious stone or semi-precious stone. In particularly preferred embodiments, the material is glass or a plastic material. It is also particularly preferred that the material has a refractive index of at least 1.45, preferably at least 1.50, and most preferably at least 1.52, which gives a 'crystal glass' appearance.

The front surface 16 and rear surface 18 of the body 14 are arranged substantially opposite each other, and hence face towards each other. A spacing between the front and rear surfaces 16, 18 defines a thickness t of the body 14. Because the front surface 16 and rear surface 18 are faceted surfaces, the thickness t of the body 14 varies across the body 14, i.e. it is not constant. A maximum thickness tₘₐₓ of the body 14 is defined as a maximum spacing between the front and rear surfaces 16, 18.

The body 14 comprises sides 30, 32 that extend between the front surface 16 and the rear surface 18. In this example the sides 30, 32 are substantially planar, though other configurations are possible. A maximum spacing between the sides 30, 32 defines a width w of the body 14. In this example, the width w is greater than the thickness t of the body 14, such that the body 14 is generally elongate, though other configurations are envisaged.

The body 14 of the element 12 comprises one or more light inlet regions 34 through which light from a light source can enter the body 14. Preferably the light inlet region is free from the first layer 22 and the second layer 24.

In this example, the light inlet region 34 is defined by sides 30, 32 of the body 14. The sides of the body are not covered with either the first layer 22 or the second layer 24. Incident light L enters the body 14 of the element 12 at least through the light inlet region 34. The light source 20 is therefore positioned near the light inlet region 34 and is configured to direct incident light L through the light inlet region 34 and into the body 14 of the element 12.

Embodiments are also envisaged in which the lighting element comprises a plurality of light sources 20, arranged to direct light towards the body 14 from different locations and/or at different orientations. The plurality of light sources may be positioned near a single light inlet region 34. Alternatively, the body 14 of the element 12 may have multiple light inlet regions 34 which may be either arranged proximal to each other or distributed around the body 14 of the element 12. Each of these light inlet regions 34 may have its own associated light source 20, or one light source 20 may direct light multiple light inlet regions 34.

The light source 20 may be any suitable source of light. LED lights are particularly suitable to be used as a light source 20. White light, for example generated by white LEDs may be particularly preferred.

Considering the layers 22, 24 in more detail, the first layer 22 of this example covers substantially the entire front surface 16 of the body 14 and therefore covers substantially all of the planar facets 26 of the front surface 16.

The first layer 22 may be made of any suitable material that has a light transmission coefficient for incident light L between 50% and 70% (i.e. between 50% and 70% of the total intensity of light in the visible spectrum that is incident on the first layer is transmitted therethrough). It is particularly preferred that the layer transmits all wavelengths of visible light to substantially the same extent: for example, that the transmission coefficient measured as a percentage, does not vary by more than 2% across the visible spectrum.

The first layer 22 is also configured to have a light absorption that is as low as possible (i.e. as close as possible to 0). The first layer is configured to reflect at least a portion of the incident light L which is not transmitted (for example at least between approximately 30% and approximately 50%). It is particularly preferred if the reflectivity of the first layer is higher than the surface reflections of the body 14 of the element 12 (i.e. the first layer and the body are configured such that the reflectivity of the first layer is greater than the Fresnel reflections of the body for all angles of incidence of the incident light). This means that the light reflected from the first layer dominates over surface reflections from the body, meaning that the reflected incident light is clearly visible and distinct from surface reflections.

Suitable materials for the first layer 22 include, for example, dielectric materials. In particularly preferred embodiments, the material comprises TiOz and/or SiOz layers. The first layer 22 can be applied using physical vapour deposition (PVD) techniques, or other suitable application techniques.

The first layer may be any suitable thickness, for example between 20 and 500 nm.

The second layer 24 of this example covers substantially the entire rear surface 18 of the body 14 and therefore covers substantially all of the planar facets 28 of the rear surface 18. The second layer 24 is a reflective layer in the form of a mirror layer that is configured to reflect at least 50% of incident light L. In other words, at least 50% of the intensity of all light in the visible spectrum that is incident on the reflective layer is reflected by the layer. It is preferred that the reflectivity if as high as possible, and a reflectivity of, for example, 90% or more, is particularly desirable.

Suitable materials for the second layer 24 include, for example, metals such as silver, aluminium or chromium, or dielectric materials. The second layer 24 can be applied using physical vapour deposition (PVD) techniques, or other suitable application techniques. The second layer may have any suitable thickness, for example at least 40 nm. A particularly suitable thickness range is between approximately 100 nm and approximately 200 nm. It is particularly preferred that the second layer 24 has a thickness of approximately 150 nm.

Figure 2 shows the path of light in the lighting element 10 when the lighting element 10 is in use.

Light L produced by the light source 20 that is incident on element 12 enters the body 14 of the element 12 through the light inlet region 34 at a side 32 of the element 10. The light is transmitted through the body 14 to the second layer 24, where the majority of the light is reflected back through the body towards the front surface 16 to form a first reflected light portion R1. At the front surface, when the reflected light portion R1 reaches the first layer 22, a portion of the light is transmitted through the first layer 22 to form a first transmitted light portion T1 that is observed by an observer. A further portion is reflected back into the body to define a second reflected light portion R2 that is transmitted through the body 14.

The reflection process repeats, with the second reflected portion R2 being transmitted to the second layer 24, where the majority of the light is reflected back through the body towards the front surface 16 to form a third reflected light portion R3. At the front surface, when the reflected light portion R3 reaches the first layer 22, a portion of the light is transmitted through the first layer 22 to form a second transmitted light portion T2 that is observed by an observer. A further portion is reflected back into the body to define a fourth reflected light portion R4 that is transmitted through the body 14.

The reflection process repeats again, creating a corresponding fifth reflected light portion R5, a third transmitted light portion T3 and a sixth reflected light portion R6. The reflection process continues, creating additional reflections, until the intensity of the reflected light is too low to observe.

The transmitted light portions T1, T2, T3 etc emerge from the element at different angles. The light portions therefore give the appearance of originating from different facets at different orientations. The overall appearance is therefore that of an element having a more complex faceted structure than the actual structure of the body 14 of the element 12. In particular the element appears to have more facets than it actually does.

A complex faceted appearance can thereby be generated using a body 14 with a relatively simple facet pattern. To produce the same facet appearance without the first and second layers 16, 18, the body would have to be a more complex shape, with more facets and a thicker body to accommodate the greater number of facets. Thus, by virtue of the first and second layers 16, 18, the depth of the body, and hence its overall size and weight, can be reduced, while still providing a complex shape.

As noted above, the first layer 16 has a transmission co-efficient that is between 50% and 70%. This range of transmission co-efficient is selected to provide a balance between a high enough transmission that light reflected off the second layer 18 will be transmitted through the first layer and hence be visible to the observer, and a low enough transmission (and hence high enough reflection) that enough light is reflected back to the second layer to provide the effect of repeated reflections. If the transmission co-efficient is below 50%, the reflection cannot be observed, and the element appears metallic. If the transmission co-efficient is above 70%, multiple reflections will not be observed, and the element does not have the complex faceted appearance.

As also noted above the second layer 18 is configured to have a reflectivity of at least 50%. A reflectivity of at least 50% provides sufficient intensity in the reflected light to create multiple observable reflections.

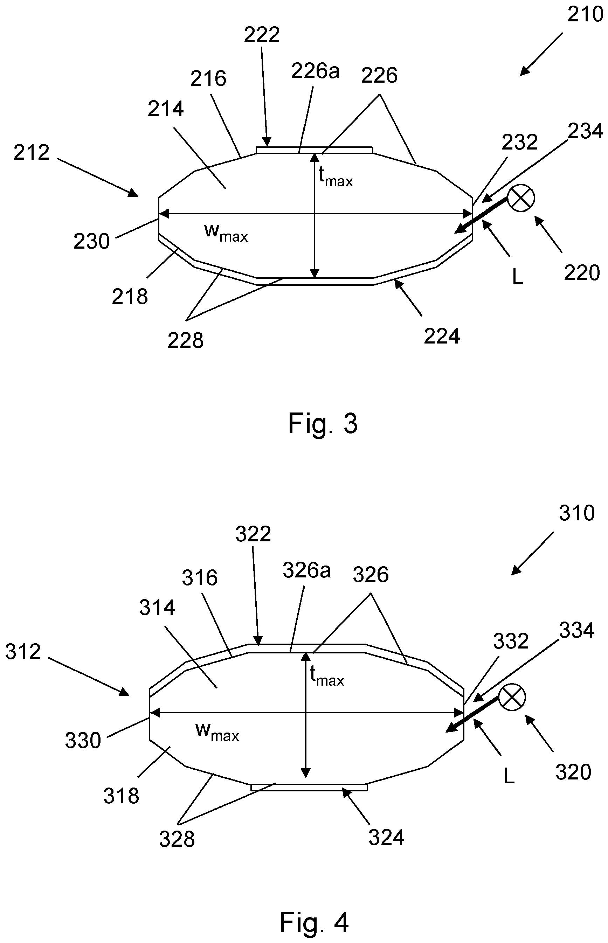

Figure 3 shows another embodiment of a lighting element 210 which is the same as the embodiment shown in Figures 1 and 2, except that the first layer 222 of this example covers only a portion of the front surface 216 of the body 214. More specifically, the first layer 222 covers only a single planar facet 226a of the front surface 216. In other embodiments of the invention, multiple planar facets 226a may be covered with the first layer 222.

Figure 4 shows a further embodiment of a lighting element 310 which is the same as the embodiment shown in Figures 1 and 2, except that the second layer 324 of this example covers only a portion of the rear surface 318 of the body 314. More specifically, the second layer 324 covers only a single planar facet 328a of the rear surface 318. In other embodiments of the invention, multiple planar facets 328a of the rear surface may be covered with the first layer 322.

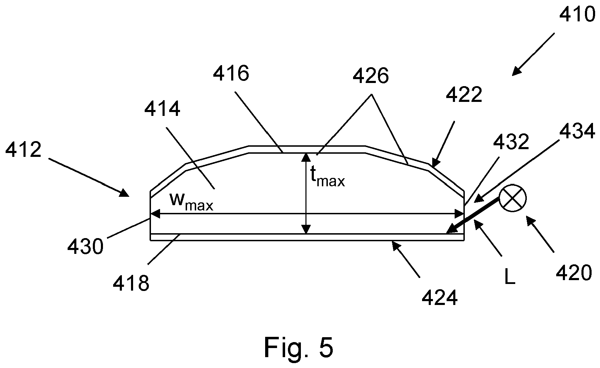

Figure 5 shows another alternative embodiment of a lighting element 410 which is the same as the embodiment shown in Figures 1, 2, and 3b except that the rear surface 418 is substantially planar and is therefore not faceted.

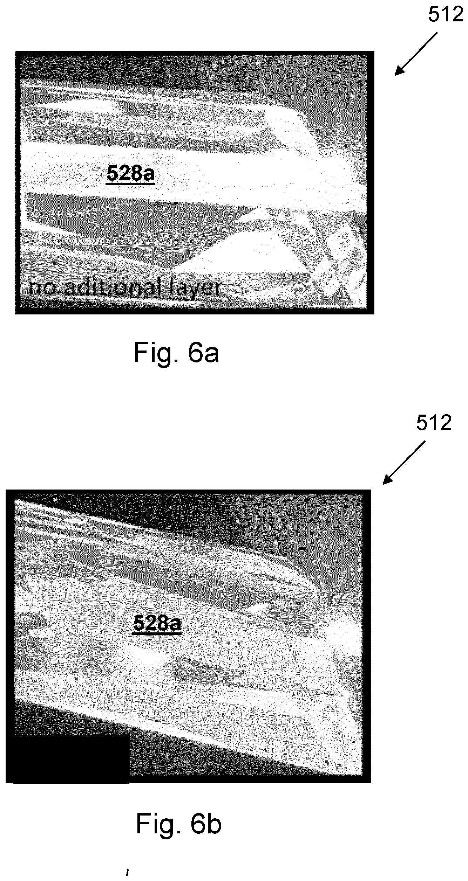

Figures 6a and 6b illustrate an element 512 that is particularly suitable for use in a lighting element that defines a vehicle headlight. In this example, both the front surface and rear surface are faceted. The first layer covers substantially all of the front surface, while the second layer covers only a part of the rear surface: in this case only one facet 528a of the rear surface.

Figure 6a shows the appearance of the element 512 with the layers removed, so that only the physical shape of the element is observed. Figure 6b shows the appearance of the element with the layers in place, and with the element illuminated by a lighting element. In Figure 6b, the element has a more complex appearance, and gives the impression of having additional facets that do not appear in Figure 6a. These additional facets appear to the observer because of the multiple reflections emerging at different angles, caused by the combination of the faceted body and the first and second layers.

A complex faceted appearance is thereby generated using a body with a relatively simple facet pattern. To produce the same facet effect without the first and second layers the body would have to be a more complex shape, with more facets and a thicker body to accommodate the greater number of facets. Thus, by virtue of the first and second layers the depth of the body, and hence is overall size and weight, can be reduced, while still providing a complex shape.

Other variations of the lighting elements described above are possible without deviating from the inventive concept.

For example, the body of the element may not include sides: instead the front and rear surfaces may taper to meet each other at an edge.

In the embodiments above, the body of the element is substantially colourless, though this need not be the case, and the element may be configured to produce a colour effect. For example, the body of the element may be coloured, or the body of the element may be provided with a layer of coloured, transparent material on its surface that provides a coloured appearance. A coloured appearance may be particularly desirable for a lighting element that defines an exterior vehicle light that is coloured, for example a tail light, brake light or indicator light.

The invention is not limited to any particular shape or configuration of the body or the facets.

Other coatings and layers may be used in addition to the first and second layers. For example, adhesion layer and/or, primer layers may be used to improve adhesion of the first and second layers to the body. Other functional layers may be used, such as coloured layers, wave-length selective layers and protective layers. Such layers may be provided over the first layer and/or second layer, or they may be provided between the body and the first layer and/or second layer. In this way, the first layer and/or second layer need not be applied directly onto the body, as long as light can be transmitted from the body to the first layer and/or second layer.

The lighting element need not be an exterior vehicle light, but may be a lighting element for another use: for example, an interior vehicle light, an interior or exterior light for architectural applications, domestic or commercial lighting, or any other lighting element.

Other modifications and variations will be apparent to the skilled person without deviating from the scope of the appended claims.

## Claims

1. A lighting element comprising:
an element having a body that is at least partially transparent and defining a first surface and a second surface;
a light source configured to direct incident light into the body of the element;
a first layer on at least a portion of the first surface of the body, the first layer being configured to transmit between 50% and 70% of incident light therethrough, and to reflect at least a portion of the non-transmitted incident light; and
a second layer on at least a portion of the second surface of the body, the second layer being a mirror layer configured to reflect at least 50% of incident light;
wherein the first and second layers are configured to reflect light towards each other, and wherein at least one of the first or second surfaces comprises a plurality of planar facets,
such that at least a portion of incident light from the light source is reflected back and forth within the body between the first layer and the second layer thereby creating a plurality of reflections from at least one planar facet.

2. The lighting element of Claim 1, wherein the first and second surfaces each comprise a plurality of planar facets.

3. The lighting element of any preceding claim, wherein the body comprises a front surface and a rear surface opposite the front surface, the front surface defining the first surface and the rear surface defining the second surface.

4. The lighting element of any preceding claim, wherein a surface of the body comprises a light inlet region, and wherein the light source is configured to direct incident light into the body of the element through the light inlet region.

5. The lighting element of Claim 4, wherein the first layer and the second layer do not extend over the light inlet region.

6. The lighting element of Claim 5, wherein the light inlet region is arranged on a side of the body between the first surface and the second surface.

7. The lighting element of any preceding claim, wherein the light source is configured to produce white light.

8. The lighting element of any preceding claim, wherein the first layer comprises a dielectric material.

9. The lighting element of any preceding claim, wherein the body comprises glass or a plastics material.

10. The lighting element of any preceding claim, wherein the body comprises a material having a refractive index of at least 1.45, optionally at least 1.50, preferably at least 1.52.

11. The lighting element of any preceding claim, wherein the first layer is configured to reflect between 30% and 50% of incident light.

12. The lighting element of any preceding claim, wherein the first layer and the body are configured such that the reflectivity of the first layer is greater than the Fresnel reflections of the body for all angles of incidence of the incident light.

13. The lighting element of any preceding claim, wherein the lighting element is an automotive exterior light.

14. An element for use in the lighting element of any of Claims 1 to 13, the element comprising:
a body that is at least partially transparent and defining a first surface and a second surface;
a first layer on at least a portion of the first surface of the body, the first layer being configured to transmit between 50% and 70% of incident light therethrough, and to reflect at least a portion of the non-transmitted incident light; and
a second layer on at least a portion of the second surface of the body, the second layer being a mirror layer configured to reflect at least 50% of incident light;
wherein the first and second layers are configured to reflect light towards each other, and wherein at least one of the first or second surfaces comprises a plurality of planar facets, such that when light is incident on the body, at least a portion of the incident light is reflected back and forth within the body between the first layer and the second layer thereby creating a plurality of reflections from at least one planar facet.
